# FASCICULE DE BREVET EUROPEEN

(11) **EP 0 655 296 B1**
(45) Date de publication et mention de la délivrance du brevet: **29.04.1998**
(21) Numéro de dépôt: 94490052.1
(22) Date de dépôt: 31.10.1994
(51) Int. Cl.: B23Q 5/04, B23Q 1/54, B23Q 16/02

(54) **Dispositif porte-outil, notamment tête de fraisage, à porte-broche orientable**
Werkzeugträger, insbesonder Fräskopf, mit orientierbaren Spindelträger
Tool head, specially milling head, with tiltable Spindle

(30) Priorité: 04.11.1993 FR 9312383
(43) Date de publication de la demande: 31.05.1995
(73) Titulaire: HENRI LINE S.A., F-80301 Albert Cédex (FR)
(72) Inventeur: Kwapisz, Jean Joseph Andre, F-80300 Albert (FR)
(74) Mandataire: Hénnion, Jean-Claude

(56) Documents cités:
- DE-A- 2 735 120
- DE-A- 3 630 260
- FR-A- 2 107 710
- FR-A- 2 131 763
- US-A- 1 796 079
- PATENT ABSTRACTS OF JAPAN vol. 9, no. 206 (M-406) (1929) 23 Août 1985 & JP-A-60 067 054 (MITSUBISHI) 17 Avril 1985
- PATENT ABSTRACTS OF JAPAN vol. 9, no. 42 (M-359) (1765) 22 Février 1985 & JP-A-59 182 037 (TOSHIBA) 16 Octobre 1984

## Description

La présente invention a pour objet un dispositif porte-outil, notamment tête de fraisage, comportant un corps pour son adaptation sur une machine-outil, et un porte-broche, qui est destiné à recevoir une broche porte-outil, et qui est monté rotatif par rapport au corps du dispositif porte-outil. Elle concerne plus particulièrement un dispositif porte-outil perfectionné en ce que le porte-broche est du type à couronne dentée, mais peut être mis dans une position angulaire qui n'est pas nécessairement proportionnelle à la distance entre deux dents de la couronne dentée.

Dans le domaine des dispositifs porte-outil, et plus particulièrement des têtes de fraisage, il existe deux types de dispositifs, ayant un porte-broche rotatif. Selon le premier type de dispositif, le positionnement angulaire du porte-broche peut être réalisé dans une plage de variation angulaire de 36O°, mais est nécessairement égal à un angle donné, par exemple 1°, 1°15′, 1°3O′, etc, ou un multiple de cet angle. Ceci est dû au fait que le porte-outil est bloqué en position par rapport au corps du dispositif porte-outil , par l'intermédiaire de deux couronnes dentées, qui engrènent l'une dans l'autre, l'une étant fixée sur le corps du dispositif, l'autre étant fixée sur le porte-broche. Le positionnement angulaire du porte-broche est réalisé dans un premier temps, en décalant légèrement le porte-broche dans la direction de son axe de rotation, de manière à mettre les deux couronnes dentées hors de prise, puis dans un deuxième temps en mettant en rotation le porte-broche ainsi libéré d'un angle prédéterminé, et enfin dans un troisième temps en ramenant le porte-broche dans une position de blocage, dans laquelle les deux couronnes dentées engrènent l'une dans l'autre. On comprend que le positionnement relatif du porte-broche par rapport au corps du dispositif porte-outil ne peut se faire que par une rotation incrémentale correspondant au minimum à une dent des couronnes dentées. Le positionnement angulaire minimum est donc fonction du nombre de dents des deux couronnes dentées.

Ce premier type de dispositif porte-outil a par exemple déjà été décrit dans la demande de brevet allemand, publiée sous le numéro DE 36 30 260. Le porte-broche du dispositif décrit dans ce document possède une double rotation incrémentale, selon deux axes perpendiculaires. Il peut donc être réglé en rotation selon chacune de ses deux directions , mais pour chacune de ces directions le positionnement angulaire est fonction du nombre de dents des couronnes dentées d'accouplement.

Selon le deuxième type de dispositif, le positionnement angulaire du porte-broche est obtenu suivant un angle quelconque par une rotation continue du porte-broche. La demande de brevet japonais de la société TOSHIBA, publiée sous le numéro JP 59 182 037, décrit une tête de machine-outil qui, de manière semblable au dispositif du document DE 36 30 260, comporte un porte-broche possédant une double rotation , selon deux axes perpendiculaires, mais pour lequel les moyens de mise en rotation selon chaque axe permettent un réglage angulaire continu du porte-broche.

Le but que s'est fixé la demanderesse est de proposer un dispositif porte-outil, qui soit du premier type précité, c'est à dire un dispositif porte-outil permettant un positionnement angulaire incrémental de son porte-broche, mais qui en pallie l'inconvénient principal, en autorisant un positionnement angulaire de ce porte-broche d'un angle quelconque entre O et 36O°.

Ce but est parfaitement atteint par le dispositif porte-outil de l'invention, qui, de manière connue notamment par le document DE 36 30 260, comporte:
- un corps principal qui permet le montage du dispositif sur une machine-outil,
- une pièce intercalaire, qui est montée rotative sur le corps principal et qui est équipée d'une première couronne dentée,
- des moyens d'entraînement et de blocage en rotation de la pièce intercalaire par rapport au corps principal,
- un porte-broche, qui est monté rotatif selon un axe XX' par rapport à la pièce intercalaire, sur lequel est fixé une deuxième couronne apte à engrener avec la première couronne, et qui est mobile en translation selon l'axe XX' entre une position de blocage en rotation dans laquelle les couronnes dentées engrènent l'une dans l'autre, et une position de mise en rotation dans laquelle les deux couronnes dentées sont hors de prise,
- des moyens de mise en translation du porte-broche entre les positions de blocage et de mise en rotation,
- et des moyens d'entraînement en rotation du porte-broche selon l'axe XX'.

De manière caractéristique selon l'invention, l'axe de rotation de la pièce intercalaire par rapport au corps principal est confondu avec l'axe de rotation XX' du porte-broche, et les moyens d'entraînement et de blocage en rotation de cette pièce intercalaire permettent son réglage continu en rotation d'un angle quelconque selon l'axe XX'.

Dans le dispositif de l'invention, le réglage de la position angulaire du porte-broche par rapport au corps principal peut être obtenu, dans un premier temps en réglant l'angle de rotation du porte-broche, par rapport à la pièce intercalaire, à une valeur prédéterminée qui est fonction de la denture des couronnes dentées, et dans un second temps en réglant l'angle de rotation de la pièce intercalaire, par rapport au corps du dispositif porte-outil, à une valeur quelconque, comprise dans la plage de rotation de la pièce intercalaire. La combinaison de ces deux réglages selon le même axe permet avantageusement d'obtenir un réglage en rotation du porte-broche, d'un angle quelconque, compris entre O et 36O°.

Le principal avantage conféré par le dispositif porte-outil de l'invention réside dans le fait que pour obtenir un réglage du porte-broche selon l'axe XX', d'un angle quelconque entre 0° et 360°, il n'est pas nécessaire que la pièce intercalaire puisse avoir une rotation de 360°, contrairement par exemple au porte-broche du dispositif du document JP 59 182 037. En effet, étant donné que selon l'invention, la rotation continue de cette pièce intercalaire est complémentaire de la rotation incrémentale du porte-broche, il suffit que le porte-broche ait une rotation de 360°, et que la pièce intercalaire ait une rotation limitée, au moins égale à l'écart angulaire entre deux dents d'une couronne utilisée pour l'accouplement entre le porte-broche et la pièce intercalaire. Or pour des raisons d'encombrement, il est fréquent que les constructeurs soit obligés de limiter la rotation de la pièce intercalaire à laquelle est accouplé le porte-broche, afin que cette pièce ne puisse pas venir perturber le travail d'usinage de l'outil qui est monté sur le porte-broche. Dans le dispositif de l'invention, cette limitation de la rotation angulaire de la pièce intercalaire n'est en aucun cas préjudiciable à un réglage de la position angulaire du porte-broche, d'un angle quelconque compris entre 0 et 360 °.

Avantageusement, les moyens d'entraînement et de blocage en rotation de la pièce intercalaire par rapport au corps seront donc conçus pour permettre le réglage de la rotation de cette pièce, selon l'axe XX', d'un angle quelconque mais dans une plage de valeurs limitée (-α, +α).

Selon une variante particulière de réalisation, la pièce intercalaire est une pièce dissymétrique par rapport à l'axe XX', dont le bord le plus éloigné de l'axe XX' est un bord denté ayant la forme d'un arc de cercle centré sur l'axe XX'; les moyens d'entraînement en rotation de la pièce intercalaire comprennent au moins un pignon qui engrène avec le bord denté de la pièce intercalaire et qui est commandé en rotation.

Dans la variante précitée, les moyens de blocage en rotation de la pièce intercalaire sont avantageusement constituées par un vérin hydraulique apte à compresser la pièce intercalaire contre le corps principal du dispositif porte-outil, à proximité du bord denté de la pièce intercalaire.

De préférence, le corps principal du dispositif porte-outil est creux ; la pièce intercalaire et la paroi du corps principal du dispositif porte-outil sur laquelle la pièce intercalaire est montée rotative sont traversées par le porte-broche ; et les moyens d'entraînement en rotation et/ou les moyens de translation du porte-broche sont placés à l'intérieur du corps principal du dispositif porte-outil.

Lorsque le corps principal fait office de logement aux moyens d'entraînement en rotation du porte-broche selon l'axe XX', et afin que ces moyens n'entravent pas la rotation de la pièce intercalaire lorsque le porte-broche est accouplé à cette pièce par l'intermédiaire des couronnes dentées, il est préférable d'une part que dans sa position de blocage en rotation, le porte-broche soit désaccouplé de ses moyens d'entraînement en rotation selon l'axe XX', et d'autre part que dans sa position de mise en rotation, le porte-broche soit accouplé à ses moyens d'entraînement en rotation.

D'autres caractéristiques et avantages de l'invention ressortiront de la description suivante d'un mode préféré de réalisation d'une tête de fraisage coulissante, selon l'invention, donnée à titre d'exemple non limitatif, en référence aux dessins annexés, sur lesquels :
- La figure 1 est une vue en coupe, d'une tête de fraisage dont le corps sert de logement aux moyens d'entraînement en rotation et aux moyens de translation du porte-broche,
- Et la figure 2 est une vue de face de la tête de fraisage de la figure 1.

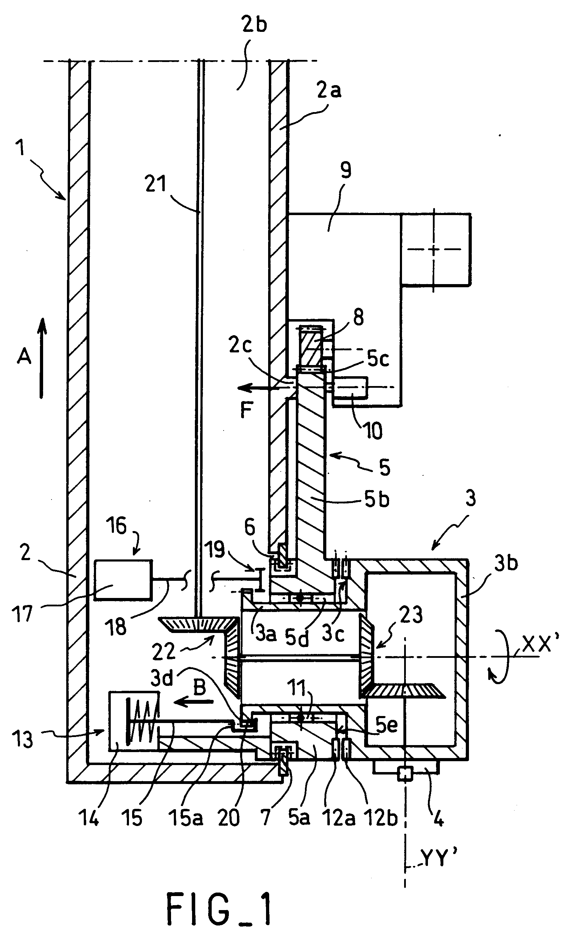

Si l'on se réfère à la figure 1, la tête de fraisage 1 comporte un corps principal 2, qui est un tube creux de cavité intérieure 2b et susceptible d'être monté coulissant sur une fraiseuse, dans le sens de la flèche A. Ce corps 2 sert de support à un porte-broche 3 à couronne dentée, monté rotatif selon un axe XX'. Sur ce porte-broche 3 est fixée une broche 4 destinée à recevoir une fraise (non représentée) rotative selon un axe YY' perpendiculaire à l'axe XX'.

Selon l'invention, l'angle de rotation selon l'axe XX' du porte-broche 3 de la tête de fraisage qui va à présent être décrit peut être réglé d'un angle quelconque entre 0 et 360°, bien que le porte-broche 3 soit à couronne dentée.

Ceci est obtenu au moyen d'une pièce intercalaire 5, qui est montée rotative selon l'axe XX', entre la paroi 2a du corps 2 et le porte-broche 3. Plus particulièrement, la pièce intercalaire 5 est une pièce dissymétrique, dont la partie basse 5a est passée à travers une ouverture 6 pratiquée dans la paroi 2a du corps 2 et dont la partie haute 5b est une plaque qui est positionnée à l'extérieur du corps creux, à proximité, et dans un plan sensiblement parallèle à la paroi 2a, lorsque la partie basse 5a est montée à travers la paroi 2a du corps 2. Le guidage en rotation de la pièce intercalaire 5 selon l'axe XX' est réalisé au moyen d'une couronne d'orientation 7 positionnée entre la partie basse 5a de la pièce intercalaire 5 et les bords de l'ouverture 6 de la paroi 2a.

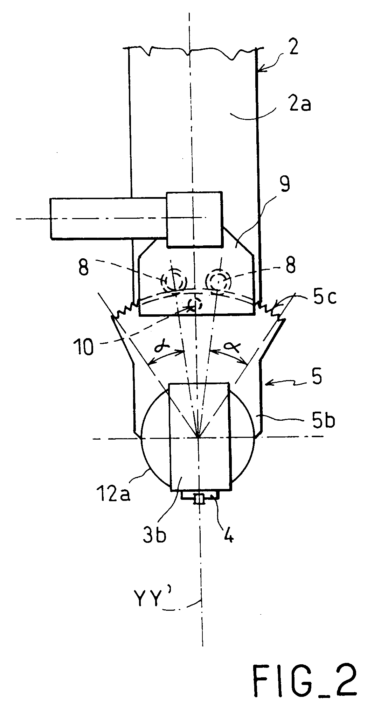

Si l'on se réfère à la figure 2, le bord supérieur 5c de la plaque constituant la partie supérieure 5b, et qui est le bord le plus éloigné de l'axe XX' est un bord denté, ayant la forme d'un arc de cercle, qui est centré sur l'axe XX'. La rotation de la pièce intercalaire 5 autour de l'axe XX' est réalisée au moyen de deux pignons 8, qui sont commandés en rotation, et qui viennent engrener avec la denture du bord supérieur 5c de la pièce intercalaire 5. Ces deux pignons 8 sont solidaires d'une boite 9 qui est fixée à la paroi 2a, et qui contient les moyens de motorisation des pignons. Ces moyens étant par ailleurs connus de l'homme du métier , ils ne seront pas décrits dans la présente description.

Sur la figure 2, la pièce intercalaire 5 est dans sa position initiale. Le bord 5c denté, en arc de cercle, est positionné symétriquement par rapport à l'axe XX'. Les deux pignons 8 étant également symétriques l'un de l'autre par rapport à cet axe XX', ils définissent chacun un angle α avec l'extrémité du bord supérieur 5c qui leur est proximale. Ainsi , selon le sens de rotation des pignons 8, il est possible de régler la rotation de la pièce intercalaire 5 selon l'axe XX', d'un angle quelconque entre O° et +α, ou entre O° et -α.Il est bien sûr possible , sans pour autant sortir du cadre de l'invention, de remplacer ces deux pignons 8, par un unique pignon situé à la verticale de l'axe XX', ou par trois pignons ou plus, répartis symétriquement par rapport à l'axe XX'.

Il est important de remarquer que lorsque l'angle de rotation de la pièce intercalaire 5 est réglé à sa valeur maximale, la partie haute 5b ne doit pas venir perturber le travail de l'outil qui est monté sur la broche 4. Par conséquent, la valeur de l'angle α est nécessairement limitée. En pratique, cet angle α est d'environ 25°.

La tête de fraisage 1 comporte également des moyens de blocage en rotation de la pièce intercalaire 5, qui sont constitués d'un vérin hydraulique 1O, qui est monté à l'intérieur de la boite 9, et qui permet de compresser la partie haute 5b de la pièce intercalaire 5 contre un décrochement 2c de la paroi 2a du corps 2. Avantageusement, afin de bénéficier au mieux de l'effet de levier par rapport à l'axe XX', ce vérin hydraulique 1O est positionné de manière à appliquer une force de pression F, sur la partie haute 5b de la pièce intercalaire 5, au niveau du bord supérieur 5c.

Le porte-broche 3 est un corps creux, constitué d'une partie cylindrique 3a et d'une partie porte-broche 3b proprement dite, ayant la forme d'un parallélépipède rectangle.Les axes respectifs de ces deux parties 3a et 3b sont perpendiculaires.

La partie cylindrique 3a est montée à travers une ouverture 5d de la partie basse 5a de la pièce intercalaire 5 et donc également à travers l'ouverture 6 de la paroi 2a du corps 2 de telle sorte que les axes des parties cylindriques 3a et porte-broche 3b soient respectivement confondus avec les axes XX' et YY'. Le porte-broche 3 est guidé en rotation selon l'axe XX', au moyen d'une couronne de roulement 11 placée entre la surface extérieure de la partie cylindrique 3a et les bords de l'ouverture 5d de la partie basse 5a de la pièce intercalaire 5.

Sur la face extérieure 5e de la partie basse 5a de la pièce intercalaire 5 est fixée une couronne dentée 12a. Sur la face 3c de la partie porte-broche 3b, qui jouxte la face 5e, est fixée, en vis-à-vis de la première couronne dentée 12a, une deuxième couronne dentée 12b, identique. Les deux couronnes dentées 12a et 12b sont donc aptes à engrener l'une dans l'autre, de manière à bloquer en rotation le porte-broche 3, par rapport à la pièce intercalaire 5.

Si l'on se réfère à la figure 1, la tête de fraisage comporte en outre des moyens 13 de mise en translation du porte-broche 3, dans la direction de l'axe XX'. Ces moyens de mise en translation 13 consistent en un vérin hydraulique 14, qui est placé à l'intérieur du corps 2, et est fixé à la partie basse 5a de la pièce intercalaire 5. L'extrémité 15a de la tige 15 de ce vérin hydraulique 14 est en forme de U. Le bord de la première partie cylindrique 3a, qui est à l'opposé de la deuxième partie 3b , et qui est situé à l'intérieur du corps 2, forme un rebord 3d qui est emboîté dans le U de l'extrémité 15a, avec un jeu suffisant pour permettre la rotation du porte-broche selon l'axe XX'.

Lorsqu'on actionne le vérin hydraulique 14, la tige 15 subit un mouvement de translation dans le sens de la flèche B. L'extrémité 15a de la tige 15, dans son mouvement de translation, vient buter contre le rebord 3d de la partie cylindrique 3a. Le porte-broche est donc également entraîné en translation dans le sens de la flèche B. Les deux couronnes dentées 12a et 12b qui étaient décrantées se rapprochent l'une de l'autre jusqu'à engrener l'une dans l'autre le porte-broche est bloqué en rotation par rapport à la pièce intercalaire 5. Cette position , dite de blocage en rotation, est celle illustrée à la figure 1. De manière inverse, lorsqu'on débloque le vérin hydraulique 14,la tige 15 et par là-même le porte-broche 3 subissent un léger mouvement de translation selon l'axe XX', dans le sens contraire de la flèche B. Le vérin hydraulique 14 est conçu de manière à ce que le débattement axial du porte-broche 3 soit suffisant pour que les deux couronnes 12a et 12b soient hors de prise lorsque le vérin hydraulique est en fin de course.Lorsque les deux couronnes dentées 12a, 12b sont hors de prise, le porte-broche 3 est libre en rotation selon l'axe XX'. Cette position du porte-broche qui n'est pas illustrée est dite position de mise en rotation.

Si l'on se réfère à la figure 1, la tête de fraisage 1 comporte également, à l'intérieur du corps 2 , des moyens d'entraînement en rotation 16 du porte-broche 3. Ces moyens d'entraînement en rotation consistent en un moto-réducteur 17, entraînant en rotation un axe 18 au bout duquel est monté un pignon 19. Par ailleurs, le bord 3d de la première partie cylindrique du porte-broche 3 est pourvu sur toute sa périphérie d'une denture 2O correspondant aux dents du pignon 19. Lorsque le porte-broche 3 est en position de mise en rotation, le pignon 19 engrène dans la denture du bord 3d, de telle sorte que la commande de la rotation de ce pignon 19 entraîne la rotation du porte-broche 3 selon l'axe XX'. Lorsque le porte-broche 3 est en position de blocage en rotation, tel qu'illustré sur la figure 1, du fait de la translation qui a été subie par le porte-broche 3 dans le sens de la flèche B, le pignon 19 n'engrène plus dans la denture 2O. Ainsi, dans cette position de blocage en rotation du porte-broche 3, la rotation de la pièce intercalaire 5 provoque par là-même la rotation du porte-broche 3 selon l'axe XX', qui n'est pas entravée par le pignon 19.

Pour la mise en rotation de la broche 4, selon l'axe YY', la tête de fraisage 1 comprend en outre, logée à l'intérieur du corps 2 et du porte-broche 3, des moyens de mise en rotation consistant en un arbre de transmission 21 commandé en rotation par une boîte de vitesse (non représentée) et qui commande la rotation de deux couples coniques 23 de renvoi, pour la mise en rotation de la broche 4 porte-outil, selon l'axe YY'.

Le procédé de réglage de l'angle de rotation du porte-broche 3 selon l'axe XX', à une valeur β prédéterminée quelconque, comporte deux étapes.

### Etape 1:

Réglage de l'angle de rotation du porte-broche 3 par rapport à la pièce intercalaire 5, à une valeur β', qui est un multiple de l'angle de rotation incrémental minimum des deux couronnes 12a et 12b, et qui est la plus proche possible de la valeur β.

Cette étape 1 peut se décomposer en la succession d'étapes suivantes :
1.1. Commande des moyens de translation 13, et plus particulièrement du vérin hydraulique 14, de manière à mettre les couronnes 12a et 12b hors de prise (position de mise en rotation du porte-broche 3) ;
1.2. Commande de la rotation du porte-broche 3 à la valeur β', à l'aide des moyens d'entraînement en rotation 16 ;
1.3. Commande des moyens de translation 13, et plus particulièrement du vérin hydraulique 14, de manière à amener le porte-broche 3 en position de blocage en rotation.

### Etape 2:

Réglage de l'angle de rotation de la pièce intercalaire 5 par rapport au corps 2 à une valeur β'', valant (β - β').

Cette étape 2 peut se décomposer en la succession d'étapes suivantes :
2.1. Commande du vérin hydraulique 1O, de manière à débloquer la partie haute 5b de la pièce intercalaire 5, par rapport à la paroi 2a du corps 2 ;
2.2. Commande de la rotation de la pièce intercalaire 5, à la valeur β'', au moyen des pignons 8;
2.3. Commande du vérin hydraulique 1O, pour le blocage en rotation de la pièce intercalaire 5, par rapport à la paroi 2a du corps 2.

Il est à noter que pour réaliser les étapes 1.2. et 2.2., il est préférable d'équiper respectivement le moto-réducteur 17 et les pignons 8 de capteurs du type codeur incrémental, de manière à connaître respectivement la position angulaire du porte-broche 3 par rapport à la pièce intercalaire 5, et de la pièce intercalaire 5 par rapport au corps 2. Par ailleurs, les moyens de commande du moto-réducteur 17 et des pignons 8 pour obtenir le positionnement angulaire voulu respectivement du porte-broche 3 par rapport à la pièce intercalaire 5, et de la pièce intercalaire 5 par rapport au corps 2, en fonction des informations délivrés par ces capteurs, sont déjà connus de l'homme du métier, et ne seront donc pas détaillés dans la présente description.

L'invention n'est pas limitée au mode particulier de réalisation d'une tête de fraisage qui vient d'être décrit, mais peut être adaptée à tout type de dispositif porte-outil comportant un porte-broche à couronne dentée.

## Revendications

1. Dispositif porte-outils, notamment tête de fraisage, qui comporte :
- un corps principal (2) qui permet le montage du dispositif sur une machine-outil,
- une pièce intercalaire (5), qui est montée rotative sur le corps principal (2) et qui est équipée d'une première couronne dentée (12a),
- des moyens d'entraînement et de blocage en rotation de la pièce intercalaire (5) par rapport au corps principal (2),
- un porte-broche (3), qui est monté rotatif selon un axe (XX') par rapport à la pièce intercalaire (5), sur lequel est fixé une deuxième couronne (12b) apte à engrener avec la première couronne (12a), et qui est mobile en translation selon l'axe de rotation (XX') entre une position de blocage en rotation dans laquelle les couronnes dentées (12a,, 12b) engrènent l'une dans l'autre, et une position de mise en rotation dans laquelle les deux couronnes dentées (12a, 12b) sont hors de prise,
- des moyens de mise en translation (13) du porte-broche (3) entre les positions de blocage et de mise en rotation,
- et des moyens d'entraînement en rotation (17, 18, 19) du porte-broche (3) selon l'axe de rotation (XX'),
caractérisé en ce que l'axe de rotation de la pièce intercalaire (5) par rapport au corps principal (2) est confondu avec l'axe de rotation (XX') du porte-broche (3), et en ce que les moyens d'entraînement et de blocage en rotation de cette pièce intercalaire (5) permettent son réglage en rotation continu d'un angle quelconque selon l'axe de rotation (XX').

2. Dispositif selon la revendication 1 caractérisé en ce que les moyens d'entraînement et de blocage en rotation de la pièce intercalaire (5) par rapport au corps principal (2) sont conçus pour permettre le réglage de la rotation de cette pièce, selon l'axe de rotation (XX'), d'un angle quelconque mais dans une plage de valeurs limitée (-α, +α).

3. Dispositif selon la revendication 2 caractérisé en ce que la pièce intercalaire (5) est une pièce dissymétrique par rapport à l'axe de rotation (XX'), dont le bord (5c) le plus éloigné de l'axe de rotation (XX') est un bord denté ayant la forme d'un arc de cercle centré sur l'axe de rotation (XX'), et en ce que les moyens d'entraînement en rotation de la pièce intercalaire comprennent au moins un pignon (8) qui engrène avec le bord (5c) denté de la pièce intercalaire (5) et qui est commandé en rotation.

4. Dispositif selon la revendication 3 caractérisé en ce que les moyens de blocage en rotation de la pièce intercalaire sont constituées par un vérin hydraulique (10) apte à compresser la pièce intercalaire (5) contre le corps principal (2) du dispositif porte-outil, à proximité du bord (5c) denté de la pièce intercalaire (5).

5. Dispositif selon l'une des revendications 1 à 4 caractérisé en ce que le corps principal (2) du dispositif porte-outil est creux, en ce que la pièce intercalaire (5) et la paroi (2a) du corps principal (2) du dispositif porte-outil sur laquelle la pièce intercalaire (5) est montée rotative sont traversées par le porte-broche (3), et en ce que les moyens d'entraînement en rotation et/ou les moyens de translation (13) du porte-broche sont placés à l'intérieur du corps principal (2) du dispositif porte-outil.

6. Dispositif selon la revendication 5 caractérisé en ce que, dans sa position de blocage en rotation, le porte-broche (3) est désaccouplé de ses moyens d'entraînement en rotation (17, 18, 19) selon l'axe de rotation (XX'), et en ce que dans sa position de mise en rotation, le porte-broche (3) est accouplé à ses moyens d'entraînement en rotation (17, 18, 19).

## Claims

1. Tool-holder device, particularly milling head, which comprises:
- a principal body (2) which allows assembly of the device on a machine-tool,
- an interposed piece (5), which is mounted to rotate on the principal body (2) and which is equipped with a first crown gear (12a),
- means for driving and for blocking in rotation the interposed piece (5) with respect to the principal body (2),
- a spindle-holder (3), which is mounted to rotate along an axis (XX') with respect to the interposed piece (5), on which is fixed a second crown (12b) adapted to mesh with the first crown (12a), and which is mobile in translation along the axis of rotation (XX') between a position of blockage in rotation in which the crown gears (12a, 12b) mesh in one another, and a position of setting in rotation in which the two crown gears (12a, 12b) are out of mesh,
- means for setting in translation (13) the spindle-holder (3) between the positions of blockage and of setting in rotation,
- and means for driving in rotation (17, 18, 19) the spindle-holder (3) along the axis of rotation (XX'),
characterised in that the axis of rotation of the interposed piece (5) with respect to the principal body (2) merges with the axis of rotation (XX') of the spindle-holder (3), and in that the means for driving and blocking this interposed piece (5) in rotation allow its continuous adjustment in rotation by any angle along the axis of rotation (XX').

2. Device according to claim 1, characterised in that the means for driving and blocking the interposed piece (5) in rotation with respect to the principal body (2) are designed to allow adjustment of the rotation of this piece, along the axis of rotation (XX'), by any angle but within a limited range of values (-α, +α).

3. Device according to claim 2, characterised in that the interposed piece (5) is a dissymetrical piece with respect to the axis of rotation (XX'), of which the edge (5c) most remote from the axis of rotation (XX') is a toothed edge having the form of an arc of circle centred on the axis of rotation (XX'), and in that the means for driving the interposed piece in rotation comprise at least one pinion (8) which meshes with the toothed edge (5c) of the interposed piece (5) and which is controlled in rotation.

4. Device according to claim 3, characterised in that the means for blocking the interposed piece in rotation are constituted by a hydraulic jack (10) adapted to compress the interposed piece (5) against the principal body (2) of the tool-holder device, in the vicinity of the toothed edge (5c) of the interposed piece (5).

5. Device according to one of claims 1 to 4, characterised in that the principal body (2) of the tool-holder device is hollow, in that the interposed piece (5) and the wall (2a) of the principal body (2) of the tool-holder device on which the interposed piece (5) is mounted to rotate are traversed by the spindle-holder (3), and in that the means for driving the spindle-holder in rotation and/or translation (13) are placed inside the principal body (2) of the tool-holder device.

6. Device according to claim 5, characterised in that, in its position of blockage in rotation, the spindle-holder (3) is uncoupled from its means for driving in rotation (17, 18, 19) along the axis of rotation (XX'), and in that, in its position of setting in rotation, the spindle-holder (3) is coupled to its means for driving in rotation (17, 18, 19).

## Patentansprüche

1. Werkzeugträger, insbesondere Fräskopf, mit den folgenden Merkmalen:
- ein Hauptkörper (2), der die Anbringung der Vorrichtung an einer Werkzeugmaschine gestattet,
- ein Zwischenteil (5), das drehbar am Hauptkörper (2) angebracht ist und mit einem ersten Zahnkranz (12a) versehen ist,
- Mittel zum Drehantrieb und zum Sperren der Drehung des Zwischenteils (5) in Bezug auf den Hauptkörper (2),
- ein Spindelträger (3), der längs einer Achse (XX') relativ zum Zwischenteil (5) drehbar angebracht ist und auf dem ein zweiter Zahnkranz (12b) befestigt ist, der dazu eingerichtet ist, mit dem ersten Zahnkranz (12a) zu kämmen, und der längs der Drehachse (XX') zwischen einer Lage zum Sperren der Drehung, in der die Zahnkränze (12a, 12b) miteinander kämmen, und einer Drehantriebslage translationsbeweglich ist, in welcher die beiden Zahnkränze (12a, 12b) außer Eingriff stehen,
- Mittel (13), um den Spindelträger (3) zwischen der Sperrlage und der Drehantriebslage in eine Translationsbewegung zu versetzen, und
- Mittel zum Drehantrieb (17, 18, 19) des Spindelträgers (3) um die Drehachse (XX'),
dadurch gekennzeichnet, daß die Achse der Drehung des Zwischenteils (5) relativ zum Hauptkörper (2) mit der Drehachse (XX') des Spindelträgers (3) zusammenfällt, und daß die Mittel zum Drehantrieb und zum Sperren der Drehung dieses Zwischenteils (5) seine Einstellung in fortgesetzter Drehung um irgendeinen Winkel um die Drehachse (XX') gestatten.

2. Vorrichtung nach Anspruch 1, dadurch gekennzeichnet, daß die Mittel zum Drehantrieb und zur Sperrung der Drehung des Zwischenteils (5) relativ zum Hauptkörper (2) derart ausgebildet sind, daß sie die Dreheinstellung dieses Teils um die Drehachse (XX') um irgendeinen Winkel gestatten, aber in einem begrenzten Bereich von Werten (-α, +α).

3. Vorrichtung nach Anspruch 2, dadurch gekennzeichnet, daß das Zwischenteil (5) ein in Bezug auf die Drehachse (XX') asymmetrisches Teil ist, dessen von der Drehachse (XX') am weitesten entfernter Rand (5c) ein gezahnter Rand mit der Form eines Kreisbogens ist, der auf die Drehachse (XX') zentriert ist, und daß die Mittel zum Drehantrieb des Zwischenteils mindestens ein Ritzel (8) aufweisen, das mit dem gezahnten Rand (5c) des Zwischenteils (5) kämmt und das zur Drehung angesteuert ist.

4. Vorrichtung nach Anspruch 3, dadurch gekennzeichnet, daß die Mittel zum Sperren der Drehung des Zwischenteils von einem hydraulsichen Zylinder (10) gebildet sind, der dazu eingerichtet ist, das Zwischenteil gegen den Hauptkörper (2) des Werkzeugträgers in Nähe des gezahnten Randes (5c) des Zwischenteils (5) anzudrücken.

5. Vorrichtung nach einem der Ansprüche 1 bis 4, dadurch gekennzeichnet, daß der Hauptkörper (2) des Werkzeugträgers hohl ist, daß das Zwischenteil (5) und die Wand (2a) des Hauptkörpers (2) des Werkzeugträgers, an der das Zwischenteil (5) drehbar angebracht ist, vom Spindelträger (3) durchsetzt sind, und daß die Mittel zum Drehantrieb und/oder die Mittel zur Translationsbewegung (13) des Spindelträgers im Inneren des Hauptkörpers (2) des Werkzeugträgers angeordnet sind.

6. Vorrichtung nach Anspruch 5, dadurch gekennzeichnet, daß der Spindelträger (3) in seiner gegenüber Drehung gesperrten Lage von seinen Mitteln zum Drehantrieb (17, 18, 19) um die Drehachse (XX') abgekoppelt ist, und daß der Spindelträger (3) in seiner Drehantriebslage an seine Mittel zum Drehantrieb (17, 18, 19) angekoppelt ist.
